(19) Europäisches Patentamt
European Patent Office
Office européen des brevets

(11) Veröffentlichungsnummer: **0 355 512 B1**

# (12) EUROPÄISCHE PATENTSCHRIFT

(45) Veröffentlichungstag der Patentschrift: **21.09.94**

(51) Int. Cl.5: **C08G 81/02**, C08L 77/00

(21) Anmeldenummer: **89114311.7**

(22) Anmeldetag: **03.08.89**

## (54) Thermoplastische Homogenisierungsprodukte und ihre Verwendung in Mischungen aus Polyamid und Styrol-Co- und/oder -Pfropf-Polymerisaten.

(30) Priorität: **16.08.88 DE 3827669**

(43) Veröffentlichungstag der Anmeldung:
**28.02.90 Patentblatt 90/09**

(45) Bekanntmachung des Hinweises auf die Patenterteilung:
**21.09.94 Patentblatt 94/38**

(84) Benannte Vertragsstaaten:
**BE CH DE ES FR GB IT LI NL**

(56) Entgegenhaltungen:
**EP-A- 001 245**
**EP-A- 283 871**
**EP-A- 0 027 198**
**EP-A- 0 058 331**
**EP-A- 0 229 298**
**DE-A- 3 641 990**

**M. Alger "Polymer Science Dictionary", Elsevier 1989, page 220**

(73) Patentinhaber: **BAYER AG**

**D-51368 Leverkusen (DE)**

(72) Erfinder: **Westeppe, Uwe, Dr.**
**Vogelskamp 72**
**D-4020 Mettmann (DE)**
Erfinder: **Piejko, Karl-Erwin, Dr.**
**Unterscheider Weg 7a**
**D-5060 Bergisch Gladbach 2 (DE)**
Erfinder: **Lindner, Christian, Dr.**
**Im Wasserblech 11**
**D-5000 Köln 91 (DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastisch verarbeitbare Homogenisierungsprodukte bestimmter chemischer Zusammensetzung sowie ihre Verwendung in thermoplastischen Formmassen aus Polyamiden und Styrol-Co- und/oder -Pfropf-Polymerisaten zur Herstellung von verbesserten Blends aus Polyamiden und Styrol-Co- und/oder -Pfropf-Polymerisaten, insbesondere ABS-Polymerisaten, mit homogenen Oberflächen und verbesserten mechanischen Eigenschaften. Die Homogenisierungsprodukte selbst werden durch Schmelz-Compoundierung von Polyamiden und Copolymerisaten auf Basis von Styrolen und/oder Acrylnitril und/oder (Meth)Acrylsäureestern mit primären oder sekundären Alkoholen und wenigstens einem Ester der (Meth)-Acrylsäure mit einem tertiären $C_4$-$C_{10}$-Alkohol hergestellt. Die Homogenisierungsprodukte wirken in den Blends als Verträglichkeitsvermittler und führen zu überraschender Verbesserung einer Reihe von Eigenschaften in thermoplastischen Formmassen.

Aus der US-A-3 134 746 sind Blends aus Polyamid-6 und Acrylnitril/Butadien/Styrol-(ABS-)Copolymeren bekannt, die schlechte Oberflächen (Delaminierung) aufweisen. Die US-A-3 485 777 beschreibt den Einsatz von Peroxiden zur Verbesserung der Eigenschaften von Blends aus Polyamid und Styrolcopolymerisaten. In der DE-A-3 037 520 wird gelehrt, daß sich thermoplastische Polymermaterialien aus Polyamiden und Styrolcopolymeren aus Styrolen und $\alpha,\beta$-ungesättigten Dicarbonsäureanhydriden durch Compoundierung herstellen lassen. Die EP-A-80 720 beschreibt Blends aus Polyamiden und Copolymeren aus Styrol und Carbonsäureamiden. In der EP-A-202 214 werden Blends aus Pfropfprodukten auf Basis Styrol, Methyl-(meth)acrylat bzw. (Meth)Acrylnitril, Polyamiden und polymeren Verträglichkeitsmachern (Copolymere aus Styrol, Acrylnitril und Maleinsäureanhydrid) beschrieben.

Aus der EP-A 283 871, einem älteren Recht, sind thermoplastische Formmassen mit verbesserten Eigenschaften, insbesondere verringerter Wasseraufnahme und Steifigkeit und verbesserter Schlagzähigkeit, aus Polyamiden A) und einem thermoplastischen Harzcopolymer B), das neben den Monomeren wie Styrol oder (Meth)acrylestern wenigstens einen (Meth)acrylsäureester eines tertiären Alkohols in Mengen bis 35 Gew.-% enthält, bekannt sowie tieftemperaturzähe, steife Formmassen aus Polyamiden und den oben bezeichneten thermoplastischen Harzcopolymeren, die zusätzlich ein Kautschukpolymerisat C) in Mengen bis 35 Gew.-% enthalten.

Die bisherigen Methoden erschienen entweder zu aufwendig oder ergaben unzureichende Eigenschaftsverbesserungen.

Es wurde nun gefunden, daß sich die technologischen Eigenschaften von Polyamidblends mit Styrol-Co- und/oder -Pfropf-Polymerisaten, vorzugsweise vom ABS-Typ, überraschenderweise durch Zusatz von speziellen Homogenisierungsprodukten deutlich verbessern lassen und insbesondere zu Formkörpern mit guten Oberflächeneigenschaften ohne Delaminisierungserscheinungen, bei insgesamt guten und auch verbesserten mechanischen Werten, verarbeiten lassen.

Die Homogenisierungsprodukte D) stellen dabei Kombinationsprodukte aus Polyamiden A1) und Copolymerisaten B) mit einpolymerisierten, tertiäre Estergruppen enthaltenden Monomeren dar, die sich durch physikalische Methoden wie Fraktionierung mit Lösungsmitteln etc. nicht mehr vollständig in die reinen Komponenten A1) und B) (Edukte) zerlegen lassen, d.h. daß zumindest eine teilweise chemische Verknüpfung zwischen den Komponenten A1) und B) besteht.

Gegenstand der Erfindung sind somit für den Vertragsstaat CH

Homogenisierungsprodukte D) aus Polyamiden A1) und Co-Polymerisaten B) mit einem tertiären Ester der (Meth)Acrylsäure,

deren Verwendung in thermoplastischen Formmassen aus Polyamiden A) und Vinyl-Co- und/oder -Pfropf-Polymerisaten C);

ferner

entsprechende thermoplastische Formmassen, enthaltend Polyamide A), Vinyl-Co- und/oder -Pfropf-Polymerisate C) und Homogenisierungsprodukte D) in noch zu kennzeichnenden Mengenverhältnissen.

Insbesondere sind Gegenstand der Erfindung

1) Homogenisierungsprodukte aus

A1) 40 bis 80 Gew.-%, bevorzugt 50 bis 75 Gew.-% teilkristallinen und/oder amorphen Polyamiden und

B) 20 bis 60 Gew.-%, bevorzugt 25 bis 50 Gew.-% thermoplastischen Copolymerisaten oder Gemischen aus mehreren thermoplastischen Copolymerisaten aus

B1) mindestens 15 Gew.-%, bevorzugt mindestens 30 Gew.-%, insbesondere mindestens 45 Gew.-%, wenigstens einem Monomer aus der Reihe

B1.1) der Styrole und $\alpha$-Methylstyrole, die auch alkyl-, halogenalkyl- und/oder halogensubstituiert sein können

und gegebenenfalls

0 bis 50 Gew.-%, bevorzugt 10 bis 50 Gew.-%, insbesondere 20 bis 40 Gew.-% an weiteren Monomeren aus der Reihe

B1.2) Acrylnitril, Methacrylnitril, der Vinyl-$C_1$-$C_4$-Carbonsäuren und Ester der Acryl- oder Methacrylsäure mit primären oder sekundären $C_1$-$C_{10}$-Alkoholen,

und

B2) 0,5 bis 35 Gew.-%, bevorzugt 1 bis 20 Gew.-%, insbesondere 1,5 bis 15 Gew.-%, wenigstens einem Ester der Acryl- oder Methacrylsäure mit tertiären $C_4$-$C_{10}$-Alkoholen in Mengen bis zu 35 Gew.-% B2) im Copolymerisat B), hergestellt durch Homogenisieren der Komponenten A1) und B) in der Schmelze in üblichen Misch- oder Knetorganen bei Temperaturen oberhalb des Schmelzpunktes der höherschmelzenden Komponente.

Weiterer Gegenstand der Erfindung ist die Verwendung der Homogenisierungsprodukte D) (auf Basis von Polyamiden A1) und Copolymerisaten B)) als Verträglichkeitsverbesserer zur Herstellung von thermoplastischen Polymermischungen mit homogenen Oberflächen und verbesserten mechanischen Eigenschaften auf der Basis von Polyamiden A) und

Vinyl-Copolymerisaten und/oder Vinyl-Propfpolymerisaten C)

wobei die Polymermischungen zusätzlich übliche Additive in üblichen, wirksamen Mengen enthalten können.

Weiterer Gegenstand der Erfindung sind entsprechende thermoplastische Formmassen mit verbesserter Oberfläche und verbesserten mechanischen Eigenschaften aus

A) mindestens 15 Gew.-%, vorzugsweise mindestens 30 Gew.-%, insbesondere 50 - 70 Gew.-% Polyamid,

C) 0,5 bis 25, vorzugsweise 1 bis 20 und insbesondere 1 bis 10 Gew.-% Interpolymer aus Polyamid A) und Copolymerisat B)

D) und 100 minus (A + D) Gew.-% Vinyl-Copolymerisaten und/oder Vinyl-Pfropfpolymerisaten C), aber immer mindestens 10 Gew.-%, besonders bevorzugt 30 bis 49 Gew.-% C.

Die Komponente C) wird also in solcher Menge mitverwendet, daß die Summe der Komponenten (A + C + D) 100 % ergibt, jedoch Komponente C) zu mindestens 10 Gew.-% in der Polymermischung enthalten ist.

An Komponente A) werden nicht mehr als 89,5 Gew.-% eingesetzt.

Die Herstellung der neuen Homogenisierungsprodukte D) erfolgt durch Homogenisieren der Komponenten A1) und B) in der Schmelze bei Temperaturen oberhalb des Schmelzpunktes der höherschmelzenden Komponente, z.B. in üblichen Misch- oder Knetwerkzeugen wie Extrudern, Banbury-Mischern, wobei während der Mischung die Bildung der Produkte D) unter chemischer Verknüpfung der Komponenten A und B erfolgt. Die genaue Struktur der gebildeten Produkte ist z.Z. noch unbekannt. Polymeranalytische Untersuchungen zeigen jedoch, daß Homogenisierungsprodukte vorliegen, die sich nicht mehr vollständig in ihre Ausgangsprodukte zerlegen lassen. Die mittlere Verweilzeit in der Schmelze bis zur Bildung der Produkte kann umso kürzer sein, je höher die Schmelztemperatur ist. Die mittlere Verweilzeit beträgt mindestens 0,5 Minute, vorzugsweise 1 bis 3 Minuten. Die Schmelzetemperatur oberhalb der Schmelztemperatur der höherschmelzenden Komponente ist im allgemeinen von derjenigen Temperatur begrenzt, bei der merkliche Abbauerscheinungen eintreten. Die Verweilzeit wird - abgesehen von den apparativen Gegebenheiten - von der homogenen Vermischung bestimmt. Die Mindestverweilzeit nimmt dabei im allgemeinen mit steigendem Gehalt an Komponente B2) im Copolymerisat B) ab.

## Polyamide A

Als Polyamid-Komponente A1) der erfindungsgemäßen Komponente D) bzw. Formmassen eignen sich alle teilkristallinen Polyamide, insbesondere Polyamid-6, Polyamid-6,6 und teilkristalline Copolyamide auf Basis dieser beiden Komponenten. Weiterhin kommen teilkristalline Polyamide in Betracht, deren Säurekomponente insbesondere ganz oder teilweise (neben Adipinsäure bzw. Caprolactam) aus Terephthalsäure und/oder Isophthalsäure und/oder Korksäure und/oder Sebacinsäure und/oder Azelainsäure und/oder Dodecandicarbonsäure und/oder Adipinsäure und/oder einer Cyclohexandicarbonsäuren besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin und/oder Diaminobutan bestehen, und deren Zusammensetzungen aus dem Stand der Technik bekannt sind.

Außerdem sind teilkristalline Polyamide zu nennen, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide A1) sind Polyamid-6 und Polyamid-6,6 oder Copolyamide mit nur geringen Anteilen (bis etwa 10 Gew.-%) der Cokomponenten.

Es können als Polyamidkomponente A1) auch amorphe Polyamide eingesetzt werden. Sie werden erhalten durch Polykondensation von Diaminen, beispielsweise Ethylendiamin, Hexamethylendiamin, Decamethylendiamin, 2,2,4- und/oder 2,4,4-Trimethylhexamethylendiamin, m- und/oder p-Xylylendiamin, Bis-(4-aminocyclohexyl)-methan, oder Gemischen aus 4,4'- oder 2,2'-Diaminodicyclohexylmethanen, 2,2-Bis-(4-aminocyclohexyl)-propan, 3,3'-Dimethyl-4,4'-diamino-dicyclohexylmethan, 3-Aminoethyl-3,5,5-trimethyl-cyclohexylamin, 2,5- und/oder 2,6-Bis-(aminomethyl)-norbornan und/oder 1,4-Diamino-methylcyclohexan, mit Dicarbonsäuren, beispielsweise Oxalsäure, Adipinsäure, Azelainsäure, Decandicarbonsäure, Heptadecandicarbonsäure, 2,2,4- und/oder 2,4,4-Trimethyladipinsäure, Isophthalsäure oder geringen Mengen an Terephthalsäure. Selbstverständlich sind auch amorphe Copolymere, die durch Polykondensation mehrerer Monomere erhalten werden, geeignet, ferner solche Copolymere, die unter Zusatz von Aminocarbonsäuren wie ω-Aminocapronsäure, ω-Aminoundecansäure oder ω-Aminolaurinsäure oder ihren Lactamen, hergestellt werden.

Besonders geeignete amorphe Polyamide sind die Polyamide, hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornan; oder aus Isophthalsäure, 4,4'-Diamino-di-cyclohexylmethan und ω-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diaminoisomeren
1 bis 30 Mol-% des 2,4'-Diaminoisomeren
0 bis 2 Mol-% des 2,2'-Diaminoisomeren

und gegebenenfalls entsprechend höherkondensierten Diaminen, die durch Hydrierung von Diaminodiphenylmethan technischer Qualität erhalten werden.

Die Polyamide A1) können auch aus Mischungen von teilkristallinen und amorphen Polyamiden bestehen, wobei vorzugsweise der amorphe Polyamidanteil unter dem teilkristallinen Polyamidanteil liegt.

Bevorzugt sind teilkristalline Polyamide auf Basis Polyamid-6, Polyamid-66 und teilkristalline Polyamide auf Basis dieser Hauptkomponenten unter Zusatz von Cokomponenten der erwähnten Art.

Thermoplastische Copolymerisate B)

Thermoplastische Copolymerisate B), die im Sinne der Erfindung mit den Polyamiden A1) zu den Produkten D) umgesetzt werden, sind Copolymere aus

B1) wenigstens einem Monomer aus der Reihe der Styrole, der α-Methylstyrole, Acrylnitril, Methacrylnitril, der Vinyl-$C_1$-$C_4$-carbonsäuren, Ester der Acryl- oder Methacrylsäure mit primären oder sekundären $C_1$-$C_{10}$-Alkoholen, wobei Styrole oder α-Methylstyrole bevorzugt als Monomere B1) enthalten sein müssen,

und

B2) wenigstens einem Ester der Acryl- oder Methacrylsäure mit tertiären $C_4$-$C_{10}$-Alkoholen, in Mengen bis zu 35 Gew.-% B2) im Copolymer B).

Bevorzugte Monomere B1) als Monomerbausteine der Copolymere B) sind Styrol, α-Methylstyrol einerseits und als weitere Monomere Acrylnitril, Methylmethacrylat, n-Butylmethacrylat, Cyclohexylmethacrylat und Vinylacetat, besonders bevorzugt sind Styrol, α-Methylstyrol sowie Acrylnitril und Methylmethacrylat. Die Styrole und α-Methylstyrole können dabei am aromatischen Ring alkyl-, halogenalkyl- oder halogensubstituiert, z.B. durch $C_1$-$C_3$-Alkyl-, halogenhaltige ($C_1$-C3)-Alkyl- und/oder Halogengruppen substituiert sein, bevorzugt jedoch sind Styrol und α-Methylstyrol.

Monomere B2) im Sinne der Erfindung sind tertiäre (Meth)Acrylsäureester und besitzen die allgemeine Formel

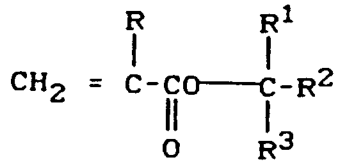

mit R = H, $CH_3$ und

$R^1$, $R^2$, $R^3$ = Alkyl, so daß die Summe der C-Atome in $R^1$, $R^2$ und $R^3$ 3 bis 9 beträgt.

Besonders bevorzugte Monomere B2) sind tert.-Butylacrylat, tert.-Butylmethacrylat, tert.-Pentylmethacrylat und tert.-Hexylacrylat, sowie gegebenenfalls tert.-Octyl(meth)acrylate.

Die Copolymere B) stellen Copolymere aus wenigstens zwei verschiedenen Monomeren dar. Sie können auch als Gemische eingesetzt werden. Besonders im Sinne der Erfindung geeignete Komponenten B) bestehen aus wenigstens zwei verschiedenen Monomeren B1) und wenigstens einem Monomer B2), wie z.B. Terpolymere aus zwei Komponenten B1), wie z.B. α-Methylstyrol, Styrol, Methylmethacrylat und Acrylnitril, in Kombination mit tert.-Butyl(meth)acrylat als Monomerkomponente B2).

Die Copolymere B) enthalten bis zu 35 Gew.-% (effektiv 0,5 bis 35 Gew.-%), bevorzugt bis zu 20 Gew.-%, eingebaute Monomere B2), insbesondere 1 bis 20 Gew.-%, ganz besonders bevorzugt 1,5 bis 15 Gew.-% an B2).

Besonders vorteilhaft sind Terpolymerisate aus Styrol/Acrylnitril/tert.-Butyl(meth)acrylat, α-Methylstyrol/Acrylnitril/tert.-Butyl(meth)acrylat, insbesondere solche Terpolymerisate aus Styrol/Acrylnitril/tertiär-Butyl-(meth)acrylat, bei denen dieses Terpolymerisat aus 35 bis 89 Gew.-%, bevorzugt 45 bis 78,5 Gew.-% Styrol und/oder α-Methylstyrol und 10 bis 50 Gew.-%, bevorzugt 20 bis 45 Gew.-%, Acrylnitril, sowie 1 bis 15 Gew.-%, bevorzugt 1,5 bis 10 Gew.-%, tert.-Butyl(meth)acrylat besteht (Gew.-% bezogen auf die Summe der Komponenten B).

Die Herstellung der Polymere B) kann nach dem Verfahren der Copolymerisation in Lösung, Masse, Suspension, Dispersion sowie Emulsion durch radikalische oder thermische Polymerisationsverfahren in an sich bekannter Weise erfolgen.

Besonders im Sinne der Erfindung geeignete Copolymere B) lassen sich durch wäßrige Emulsionspolymerisation erzeugen. Dabei werden die Monomere B1) und B2) vorteilhaft unter Mitverwendung anionischer Emulgatoren copolymerisiert. Zu besonders geeigneten Harzen B) gelangt man dann, wenn man mittels anionischer Emulgatoren vom Typ der Carbonsäuresalze polymerisiert, wie z.B. Salzen der Ölsäure, Stearinsäure, Harzsäure, Abietinsäure sowie deren disproportionierten Derivaten. Diese Emulgatoren werden zur Herstellung der Harze in den üblichen Mengen, vorzugsweise in Mengen bis zu 3 Gew.-%, bezogen auf die Summe der Monomere B1) und B2), eingesetzt.

Die Polymerisation zu B) erfolgt normalerweise bei mehr als 50 °C, insbesondere bei 60 bis 100 °C, sie kann batchweise, teilkontinuierlich oder vollkontinuierlich erfolgen.

Die Initiierung der Copolymerisation erfolgt thermisch oder mittels Radikalbildnern wie z.B. Persulfat, Perphosphat, Hydroperoxid, Azoverbindungen sowie gegebenenfalls auch durch sogenannte Redoxinitiierung; bevorzugt sind anorganische, wasserlösliche Initiatoren geeignet.

Das Molekulargewicht der Copolymere B) kann in an sich bekannter Weise durch verschiedenste Maßnahmen variiert werden, wie z.B. Temperatur, Monomerkonzentration, Startermenge oder durch Einsatz sogenannter Regler, wie z.B. von Organoschwefel-Verbindungen wie Mercaptane und Disulfide, wobei langkettige Mercaptane, z.B. n- und tert.-Dodecylmercaptan vorteilhaft sind. Die Regler werden normalerweise im Monomergemisch gelöst und die Mischung danach polymerisiert.

Besonders vorteilhafte erfindungsgemäße Homogenisierungsprodukte werden dann erhalten, wenn B) bestimmte Molekulargewichte aufweist, d.h. die Grenzviskositäten (η), gemessen in dl/g bei Raumtemperatur in DMF, vorzugsweise im Bereich von 0,2 bis 2, insbesondere aber im Bereich von 0,3 bis 1,5 liegen.

Vinyl-Co- und/oder Pfropf-Polymerisate

Vinyl-Co- und/oder Pfropf-Polymerisate C) im Sinne der Erfindung sind wie folgt zu charakterisieren

C1) Copolymer-Komponente:

Harzartige Polymerisate bzw. Copolymerisate aus Styrolen, α-Methylstyrolen, Acrylnitril, Methacrylnitril, Estern der (Meth)Acrylsäure, Vinyl-$C_1$-$C_4$-carbonsäuren bzw. Mischungen aus diesen Monomeren, mit Grenzviskositäten (Staudinger-Indices) [$\eta$] zwischen 0,3 und 1,5 dl/g (in Toluol bei 23 °C gemessen). Bevorzugt sind Copolymere aus Styrol oder α-Methylstyrol mit Acrylnitril, die gegebenenfalls bis zu 40 Gew.-% Ester der (Meth)Acrylsäure, insbesondere Methylmethacrylat oder n-Butylacrylat enthalten. Styrolderivate müssen auf jeden Fall als Monomere enthalten sein. Die Styrolderivate sind dabei in Anteilen zwischen 100 und 10 Gew.-%, bevorzugt 90 bis 20 Gew.-%, besonders bevorzugt zwischen 80 bis 30 Gew.-% enthalten. Die Vinylpolymerisate C1) werden wie die Polymerisate B) nach üblichen Verfahren wie radikalische Polymerisation in Masse, Lösung, Suspension oder Emulsion, bevorzugt aber durch radikalische Emulsionspolymerisation in Wasser, erhalten.

Weiterhin sind als Vinylpolymerisate C) zur verwenden:

C2) Pfronfcopolymer-Komponente:

Pfropfpolymerisate von Monomeren wie Styrolen, α-Methylstyrolen, Acrylnitril, Methacrylnitril, Alkyl(meth)acrylaten, bevorzugt Mischungen aus diesen Monomeren, gepfropft auf Kautschuke mit Glastemperaturen <0 °C, vorzugsweise <-20 °C, wobei die Pfropfpolymerisate Kautschukgehalte von 1 bis 85 Gew.-%, bevorzugt 10 - 80 Gew.-%, aufweisen. Die Pfropfpolymerisate lassen sich durch übliche Verfahren in Lösung, Masse oder Emulsion, bevorzugt in Emulsion, herstellen.

Bevorzugt sind radikalisch hergestellte Emulsionspfropfpolymerisate auf teilchenförmige, hochvernetzte Kautschuke (Dien- oder Alkylacrylatkautschuke) mit Gelgehalten >80 Gew.-% und mittleren Teilchendurchmessern ($d_{50}$) von 80 bis 800 nm.

Dienkautschuke sind z.B. Polybutadien, Polyisopren, und Copolymerisate von Butadien mit bis zu 35 Gew.-% Comonomeren wie Styrol, Acrylnitril, Methylmethacrylat, $C_1$-$C_6$-Alkylacrylat. Acrylatkautschuke sind z.B. vernetzte teilchenförmige Emulsionscopolymerisate aus $C_1$-$C_6$-Alkylacrylaten, insbesondere $C_2$-$C_6$-Alkylacrylaten, gegebenenfalls in Mischung mit bis zu 15 Gew.-% Comonomeren wie Styrol, Methylmethacrylat, Butadien, Vinylmethylether, Acrylnitril und wenigstens einem polyfunktionellen vernetzenden Comonomer, z.B. Divinylbenzol, Glykol-bisacrylate, Bisacrylamide, Phosphorsäuretriallylester, Zitronensäuretriallylester, Allylester von Acrylsäure und Methacrylsäure, Triallylisocyanurat, wobei die Acrylatkautschuke bis zu 4 Gew.-% der vernetzenden Comonomere enthalten können.

Geeignet sind auch Gemische von Dien- und Alkylacrylatkautschuken sowie Kautschuke mit einer sogenannten Kern-Mantel-Struktur. Die Kautschuke liegen in Form kleiner diskreter Teilchen vor. Die Teilchengröße solcher Kautschuke liegt bekanntermaßen im Bereich von 10 bis 2000 nm.

Die Polymerisate C2) können nach üblichen Verfahren wie z.B. durch radikalische Emulsionspfropfpolymerisation von Vinylmonomeren in Gegenwart der Kautschuklatices bei Temperaturen von 50 bis 90 °C unter Verwendung wasserlöslicher Initiatoren wie Peroxodisulfat oder mit Hilfe von Redoxinitiatoren, erzeugt werden. Besonders geeignet sind die als ABS-Polymerisate bekannten, technisch vielfach genutzten Pfropfpolymerisate.

Als Komponente C) lassen sich auch Mischungen der Komponenten C1) und C2) verwenden. Dies ist besonders dann bevorzugt, wenn besonders zähe Formmassen erhalten werden sollen. In der Mischung sollte keine Komponente unter 5 Gew.-%, vorzugsweise unter 15 Gew.-% liegen.

Die Komponente C1) bzw. die Pfropfauflage der Komponente C2) können gegebenenfalls als eingebautes Monomer (wie Komponente B)) geringe Mengen tertiäre Ester der (Meth) Acrylsäure (d.h. Ester mit tertiären Alkoholen) enthalten. Bevorzugt liegt der Anteil der tertiären Ester in C) zwischen 0 bis 10 Gew.-%, insbesondere enthält C) maximal 50, bevorzugt <20 % des Anteils tertiärer Ester in der Komponente B). Es ist jedoch im Sinne der Erfindung besonders bevorzugt, daß die Komponente C) keine tertiär-Alkohol-Ester enthält. Es ist überraschend, daß entsprechend der Erfindung der geringen Menge an präformiertem Produkt D zu der erheblich verbesserten Randfaserdehnung, Zähigkeit und guten Oberflächen solcher Mischungen aus A und C führt.

Die erfindungsgemäßen, thermoplastischen Formmassen können Additive wie Gleit- und Entformungsmittel, Nukleierungsmittel, Stabilisatoren, Flammschutzmittel, Farbstoffe sowie Thermostabilisatoren, Antioxidantien und/oder Lichtschutzmittel in üblichen, wirksamen Mengen enthalten.

Die Herstellung der Formmassen kann durch Vermischen der Komponenten in üblichen Mischaggregaten, wie Walzen, Knetern, Ein- oder Mehrwellenextrudern erfolgen. Die Temperatur bei der Herstellung der Mischungen sollte mindestens 10 °C und zweckmäßig höchstens 90 °C oberhalb des Polyamidschmelzpunktes liegen.

Entsprechend dem Eigenschaftsbild eignen sich die Formmassen überall im Spritz- und Extrusionssektor, wo die besonderen Eigenschaften wie verbesserte mechanische Werte und homogene Oberflächen gefordert werden, wie z.B. im Kfz.-Bereich für Stoßfänger, Karosserieteile oder im Sport/Freizeitsektor.

Beispiele:

Verwendete Komponenten:

A. Polyamid

Polyamid-6 mit einer relativen Viskosität (gemessen an einer 1 gew.-%igen Lösung in m-Kresol bei 25 °C) von 3,1.

B. Copolymer B

In einem 10 l Rührgefäß wird eine Lösung aus 3723 g Wasser, 83 g Na-Salz der disproportionierten Abietinsäure und 43 g 1n-Natronlauge vorgelegt. Nach Verdrängen der Luft durch Stickstoff und Einstellung der Innentemperatur auf 75 °C werden 7 g Kaliumperoxodisulfat und 358 g Wasser zugesetzt. 1540 g α-Methylstyrol, 653 g Acrylnitril, 140 g tert.-Butylacrylat und 2 g t-Dodecylmercaptan werden innerhalb von 6 h bei 75 °C zudosiert. Direkt nach Abschluß der Zudosierung werden 1,2 g Kaliumperoxodisulfat gelöst in 46,7 g Wasser zugesetzt und weitere 4 h bei 75 °C gerührt.

Der erhaltene α-Methylstyrol-Acrylnitril-tert.-Butylacrylatcopolymer-Latex wird wie üblich durch Zusatz von 1,2 Gew.-%, bezogen auf Polymerfeststoff, phenolischer Antioxidantien stabilisiert. Danach wird der Latex bei 85 °C bis 95 °C mit einer wäßrigen Lösung von $MgSO_4$ (Bittersalz) und Essigsäure bei pH 4 bis 5 koaguliert, filtriert, elektrolytfrei gewaschen und bei 60 °C getrocknet.

C. Copolymer C/1a

In einem 10 l Rührgefäß wird eine Lösung aus 3723 g Wasser, 83 g Na-Salz der disproportionierten Abietinsäure und 43 g 1n-Natronlauge vorgelegt. Nach Verdrängen der Luft durch Stickstoff und Einstellung der Innentemperatur auf 75 °C werden 7 g Kaliumperoxodisulfat und 358 g Wasser zugesetzt. 1610 g α-Methylstyrol, 723 g Acrylnitril und 2 g t-Dodecylmercaptan werden innerhalb von 6 h bei 75 °C zudosiert. Direkt nach Abschluß der Zudosierung werden 1,2 g Kaliumperoxodisulfat gelöst in 46,7 g Wasser zugesetzt und weitere 4 h bei 75 °C gerührt.

Der erhaltene α-Methylstyrol-Acrylnitrilcopolymer-Latex wird durch Zusatz von 1,2 Gew.-%, bezogen auf Polymerfeststoff, phenolischer Antioxidantien stabilisiert. Danach wird der Latex bei 85 °C bis 95 °C mit einer wäßrigen Lösung von $MgSO_4$ (Bittersalz) und Essigsäure bei pH 4 bis 5 koaguliert, filtriert, elektrolytfrei gewaschen und bei 60 °C getrocknet. Pfropfcopolymer C/2a Zur Herstellung des Pfropfpolymerisates C/2a werden nach dem Verfahren der Emulsionspolymerisation 36 Gew.-Teile Styrol und 14 Gew.-Teile Acrylnitril auf 50 Gew.-Teile eines grobteiligen Kautschuks mit einem mittleren Teilchendurchmesser der in Latexform vorliegenden Butadienpfropfgrundlage von 0,4 µm und einem Gelgehalt von 86 Gew.-% aufgepfropft (Gelbestimmung nach M. Hoffmann et al, Polymeranalytik I und II, Georg Thieme Verlag, Stuttgart (1977)).

D. Homogenisierungsprodukte 1:

Auf einem kontinuierlich arbeitenden Doppelwellenextruder werden 70 Gew.-Teile Polyamid A) und 30 Gew.-Teile Copolymer B) getrennt, aber gleichzeitig zudosiert und in der Schmelze bei 272 °C homogenisiert (Verweilzeit etwa 2 Minuten), abgekühlt, granuliert und getrocknet.

Herstellung und Prüfung der Formmassen 1 (Vergleich) und 2 bis 4 (erfindungsgemäß)

Auf einem kontinuierlich arbeitenden Doppelwellenextruder wurden die Komponenten (vgl. Tabelle 1) dosiert und bei 265 °C Massetemperatur homogenisiert, abgekühlt, granuliert und getrocknet.

Von den Formmassen wurden auf einer üblichen Spritzgußmaschine 80 x 10 x 4 $mm^3$ Prüfstäbe hergestellt. Geprüft wurde der Biege-E-Modul (DIN 53 457), 3,5 % Biegespannung (DIN 53 452), die Schlagzähigkeit nach Izod (ISO 180) bei Raumtemperatur und -20 °C sowie die VICAT-Erweichungstemperatur VST/B (DIN 53 460).

Tabelle 1:

Zusammensetzung:

| Formmasse | | 1 (Vergleich) | 2 | 3 | 4 |
|---|---|---|---|---|---|
| | | | ←erfindungsgemäß→ | | |
| Komponente | | | | | |
| A (Gew.-%) (Polyamid A) | PA-6 | 70 | 65 | 65 | 60 |
| C (Gew.-%) (Styrol-Co-Polymerisat | C/1a | 30 | 30 | 25 | 20 |
| D (Gew.-%) | | -- | 5 | 10 | 20 |

Eigenschaften:

| Formmasse | 1 (Vergleich) | 2 | 3 | 4 |
|---|---|---|---|---|
| | | ←erfindungsgemäß→ | | |
| Biege-E-Modul [MPa] | 2976 | 3012 | 2900 | 2816 |
| 3,5 % Biegespannung [MPa] | ---* | 104,1 | 102,5 | 100,4 |
| Izod-Schlagzähigkeit $a_n$ [$kJ/m^2$] bei RT | 22,5 | 35,1 | 45,6 | 53,6 |
| bei -20° C | 32,8 | 41,4 | 56,5 | 55,3 |
| Vicat B Erweichungstemperatur [° C] | 156 | 155 | 160 | 162 |

* Randfaserdehnung <3,5 %  RT = Raumtemperatur

Die ermittelten Prüfgrößen zeigen, daß die erfindungsgemäßen Formmassen 2 bis 4 verbesserte Zähigkeit, Wärmeformbeständigkeit und Randfaserdehnung aufweisen. Einige Formkörper der Zusammensetzung nach Vergleich 1 neigen zudem zur Delaminierung, während die erfindungsgemäß hergestellten Formkörper, welche den Verträglichkeitsvermittler Interpolymer D) enthalten, ausgezeichnete glatte und homogene Oberflächen aufweisen.

Herstellung und Prüfung der Formmassen 5. (Vergleich ohne D) und Formmassen 6 bis 8 -(erfindungsgemäß) als Mischung aus Copolymer-Komponente C/1a mit Propfpolymerisat-Komponente C/2a (siehe Tab. 2)

Die Vermischung und Prüfung erfolgte entsprechend dem vorhergehenden Beispiel.

Wie die Ergebnisse zeigen, werden mit einer Mischung aus C1a/C2a besonders schlagzähe Formmassen erhalten, wenn man D erfindungsgemäß mitverwendet.

Tabelle 2:

Zusammensetzung:

| Formmasse | 5 (Vergleich) | 6 ←erfindungsgemäß | 7 | 8 → |
|---|---|---|---|---|
| A (Gew.-%) (Polyamid A) | 50 | 50 | 45 | 40 |
| C 1a) (Gew.-%) (Styrol-Co-Polymerisat | 25 | 20 | 20 | 20 |
| D (Gew.-%) (Interpolymer D) | 0 | 5 | 10 | 20 |
| C 2a) (Gew.-%) (Styrol-Co-Polymerisat | 25 | 25 | 25 | 20 |

Eigenschaften:

| Formmasse | 5 (Vergleich) | 6 ←erfindungsgemäß | 7 | 8 → |
|---|---|---|---|---|
| Biege-E-Modul [MPa] | 2270 | 2340 | 2290 | 2300 |
| Izod-Schlagzähigkeit $a_n$ [kJ/m²] bei RT | 65,8 | 9xn.g. 1x102 | 8xn.g. 2x47 | n.g. |
| bei -20°C | 58,3 | 121,7 | 5xn.g. 5x258 | 7n.g. 3x270 |

RT = Raumtemperatur
n.g. = nicht gebrochen (es werden 10 Prüfkörper der Prüfung unterzogen)

**Patentansprüche**

**Patentansprüche für folgende Vertragsstaaten : BE, DE, GB, FR, NL, IT, ES, LI**

1. Thermoplastische Formmassen aus
   A) 30 bis 70 Gew.-% Polyamid,
   C) [100 minus (A + D)] Gew.-% an Vinyl-Copolymerisaten C 1) und/oder Vinyl-Pfropfpolymerisaten C 2), aber immer mindestens 10 Gew.-% an C),
   D) 0,5 bis 25 Gew.-% eines Homogenisierungsprodukts hergestellt aus
      A1) 40 bis 80 Gew.-% teilkristallinen und/oder amorphen Polyamiden und
   B) 20 bis 60 Gew.-% thermoplastischen Copolymerisaten oder Gemischen aus mehreren thermoplastischen Copolymerisaten aus
      B1) wenigstens einem Monomer aus der Reihe von
         B1.1) mindestens 15 Gew.-% der Styrole und α-Methylstyrole, die auch alkyl-, halogenalkyl- und/ oder halogensubstituiert sein können
      und
      B1.2) 0 bis 50 Gew.-% weiteren Monomeren aus der Reihe Acrylnitril, Methacrylnitril, der Vinyl-$C_1$-$C_4$-Carbonsäuren und Ester der Acryl- oder Methacrylsäure mit primären oder sekundären $C_1$-$C_{10}$-Alkoholen,
   und
   B2) 0,5 bis 35 Gew.-% wenigstens einem Ester der Acryl- oder Methacrylsäure mit tertiären $C_4$-$C_{10}$-Alkoholen in Mengen bis zu 35 Gew.-% B2) im Copolymerisat B),

   durch Homogenisieren der Komponenten A) und B) in der Schmelze in üblichen Misch- und Knetorganen bei Temperaturen oberhalb des Schmelzpunktes der höherschmelzenden Komponente bis zu einer zumindest teilweisen chemischen Verknüpfung zwischen den Komponenten A1) und B).

2. Thermoplastische Formmassen aus
   A) 50 bis 70 Gew.-% Polyamid,
   C) mindestens 15 Gew.-% Vinyl-Copolymerisaten C 1) und/oder Vinylpfropfpolymerisaten C 2) und
   D) 1 bis 15 Gew.-% Homogenisierungsprodukt aus Polyamid A1) und Copolymerisat B) entsprechend Anspruch 1.

3. Thermoplastische Formmassen nach Anspruch 1 und 2, dadurch gekennzeichnet, daß die Vinyl-Co- und/oder -Pfropf-Polymerisate C)
   C1) harzartige Polymerisate mit Grenzviskositäten von 0,3 bis 1,5 dl/g (in Toluol bei 23 °C) aus Styrolen, α-Methylstyrolen und Acrylnitril, Methacrylnitril, Estern der (Meth)Acrylsäuren und Vinyl-$C_1$-$C_4$-carbonsäuren bzw. Mischungen dieser Monomeren

   und/oder

   C2) Pfropfpolymerisate von Monomeren oder deren Mischungen, insbesondere von Styrolen, α-Methylstyrolen, Acrylnitril, Methacrylnitril, (Meth)Acrylsäurealkylestern, auf Kautschuke mit Glastemperaturen < °C, bevorzugt teilchenförmige, hochvernetzte Dien- oder Alkylacrylat-Kautschuke mit Gelgehalten <80 Gew.-% und mittleren Teilchendurchmessern ($d_{50}$) von 80 bis 800 nm, oder Kautschuke mit einer Kern/Mantel-Struktur

   sind.

4. Verwendung der Homogenisierungsprodukte D) gemäß Anspruch 1 als Verträglichkeitsverbesserer in thermoplastischen Formmassen aus Polyamiden A) und Vinyl-Copolymerisaten und/oder Vinyl-Pfropfpolymerisaten C) gemäß Anspruch 1 oder 3.

**Patentansprüche für folgenden Vertragsstaat : CH**

1. Homogenisierungsprodukte aus
   A1) 40 bis 80 Gew.-% teilkristallinen und/oder amorphen Polyamiden und
   B) 20 bis 60 Gew.-% thermoplastischen Copolymerisaten oder Gemischen aus mehreren thermoplastischen Copolymerisaten aus
      B1) wenigstens einem Monomer aus der Reihe von
         B1.1) mindestens 15 Gew.-% der Styrole und α-Methylstyrole, die auch alkyl-, halogenalkyl- und/ oder halogensubstituiert sein können
      und

B1.2) 0 bis 50 Gew.-% weiteren Monomeren aus der Reihe Acrylnitril, Methacrylnitril, der Vinyl-$C_1$-$C_4$-Carbonsäuren und Ester der Acryl- oder Methacrylsäure mit primären oder sekundären $C_1$-$C_{10}$-Alkoholen,

und

B2) 0,5 bis 35 Gew.-% wenigstens einem Ester der Acryl- oder Methacrylsäure mit tertiären $C_4$-$C_{10}$-Alkoholen in Mengen bis zu 35 Gew.-% B2) im Copolymerisat B),

hergestellt durch Homogenisieren der Komponenten A) und B) in der Schmelze in üblichen Misch- und Knetorganen bei Temperaturen oberhalb des Schmelzpunktes der höherschmelzenden Komponente bis zu einer zumindest teilweisen chemischen Verknüpfung zwischen der Komponenten A1) and B).

**2.** Homogenisierungsprodukte nach Anspruch 1, dadurch gekennzeichnet, daß thermoplastische Copolymerisate B) aus

B1.1) mindestens 30 Gew.-% Styrol und/oder $\alpha$-Methylstyrol und

B1.2) 0 bis 50 Gew.-% Acrylnitril, Methylmethacrylat, n-Butyl-methacrylat, Cyclohexylmethacrylat und/oder Vinylacetat und

B2) 1 bis 20 Gew.-% tertiären (Meth)Acrylsäureester der Formel

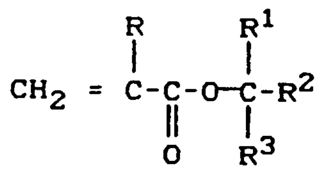

,

mit R = H, $CH_3$ und

$R^1$, $R^2$, $R^3$ = Alkyl, so daß die Summe der C-Atome in $R^1$, $R^2$ und $R^3$ 3 bis 9 beträgt, eingesetzt werden.

**3.** Homogenisierungsprodukte nach einem der Ansprüche 1 und 2, dadurch gekennzeichnet, daß thermoplastische Copolymerisate B) aus

B1.1) $\alpha$-Methylstyrol und/oder Styrol und

B1.2) Acrylnitril und/oder Methylmethacrylat und

B2) tert.-Butyl(meth)acrylat, eingesetzt werden.

**4.** Homogenisierungsprodukte nach einem der Ansprüche 1 bis 3, dadurch gekennzeichnet, daß thermoplastische Copolymerisate B) aus Terpolymerisaten mit mindestens

B1.1) 10 Gew.-% Styrolen, und

B1.2) 10 bis 50 Gew.-% Acrylnitril,

B2) sowie 1 bis 20 Gew.-% tert.-Butyl(meth)acrylat bestehen, wobei sich die Gew.-% zu 100 auf die Summe der Gew.-%-Komponenten der Komponente B) ergänzen, eingesetzt werden.

**5.** Homogenisierungsprodukte nach einem der Ansprüche 1 bis 4, dadurch gekennzeichnet, daß Copolymerisate B) mit Grenzviskositäten von 0,2 bis 2 (gemessen in dl/g bei Raumtemperatur in DMF), eingesetzt werden.

**6.** Thermoplastische Formmassen aus

A) 30 bis 70 Gew.-% Polyamid,

C) [100 minus (A + D)] Gew.-% an Vinyl-Copolymerisaten C 1) und/oder Vinyl-Pfropfpolymerisaten C 2), aber immer mindestens 10 Gew.-% an C),

D) 0,5 bis 25 Gew.-% eines Homogenisierungsprodukts hergestellt aus

A1) 40 bis 80 Gew.-% teilkristallinen und/oder amorphen Polyamiden und

B) 20 bis 60 Gew.-% thermoplastischen Copolymerisaten oder Gemischen aus mehreren thermoplastischen Copolymerisaten aus

B1) wenigstens einem Monomer aus der Reihe von

B1.1) mindestens 15 Gew.-% der Styrole und $\alpha$-Methylstyrole, die auch alkyl-, halogenalkyl- und/ oder halogensubstituiert sein können

und

B1.2) 0 bis 50 Gew.-% weiteren Monomeren aus der Reihe Acrylnitril, Methacrylnitril, der Vinyl-$C_1$-$C_4$-Carbonsäuren und Ester der Acryl- oder Methacrylsäure mit primären oder sekundären $C_1$-$C_{10}$-Alkoholen,

und

B2) 0,5 bis 35 Gew.-% wenigstens einem Ester der Acryl- oder Methacrylsäure mit tertiären $C_4$-$C_{10}$-Alkoholen in Mengen bis zu 35 Gew.-% B2) im Copolymerisat B),

durch Homogenisieren der Komponenten A) und B) in der Schmelze in üblichen Misch- und Knetorganen bei Temperaturen oberhalb des Schmelzpunktes der höherschmelzenden Komponente bis zu einer zumindest teilweisen chemischen Verknüpfung zwischen den Komponenten A1) und B).

**7.** Thermoplastische Formmassen aus

A) 50 bis 70 Gew.-% Polyamid,

C) mindestens 15 Gew.-% Vinyl-Copolymerisaten C 1) und/oder Vinylpfropfpolymerisaten C 2) und

D) 1 bis 15 Gew.-% Homogenisierungsprodukt aus Polyamid A1) und Copolymerisat B) entsprechend Anspruch 1.

**8.** Thermoplastische Formmassen nach Anspruch 6 und 7, dadurch gekennzeichnet, daß die Vinyl-Co- und/oder -Pfropf-Polymerisate C)

C1) harzartige Polymerisate mit Grenzviskositäten von 0,3 bis 1,5 dl/g (in Toluol bei 23 °C) aus Styrolen, $\alpha$-Methylstyrolen und Acrylnitril, Methacrylnitril, Estern der (Meth)Acrylsäuren und Vinyl-$C_1$-$C_4$-carbonsäuren bzw. Mischungen dieser Monomeren

und/oder

C2) Pfropfpolymerisate von Monomeren oder deren Mischungen, insbesondere von Styrolen, $\alpha$-Methylstyrolen, Acrylnitril, Methacrylnitril, (Meth)Acrylsäurealkylestern, auf Kautschuke mit Glastemperaturen < °C, bevorzugt teilchenförmige, hochvernetzte Dien- oder Alkylacrylat-Kautschuke mit Gelgehalten <80 Gew.-% und mittleren Teilchendurchmessern ($d_{50}$) von 80 bis 800 nm, oder Kautschuke mit einer Kern/Mantel-Struktur

sind.

**9.** Verwendung der Homogenisierungsprodukte D) gemäß Anspruch 6 als Verträglichkeitsverbesserer in thermoplastischen Formmassen aus Polyamiden A) und Vinyl-Copolymerisaten und/oder Vinyl-Pfropfpolymerisaten C) gemäß Anspruch 6 oder 8.

## Claims

**Claims for the following Contracting States : BE, DE, GB, FR, NL, IT, ES, LI**

**1.** Thermoplastic moulding compounds of

A) 30 to 70% by weight of polyamide,

C) [100 mins (A + D)] % by weight of vinyl copolymers C 1) and/or vinyl graft polymers C 2), but always at least 10% by weight of C),

D) 0.5 to 25% by weight of a homogenization product prepared from

A1) 40 to 80% by weight of partially crystalline and/or amorphous polyamides and

B) 20 to 60% by weight of thermoplastic copolymers or mixtures of several thermoplastic copolymers of

B1) at least one monomer from the group consisting of

B1.1) at least 15% by weight of styrenes and $\alpha$-methylstyrenes which may also be alkyl-, haloalkyl- and/or a halogen-substituted

and

B1.2) 0 to 50% by weight of other monomers from the group consisting of acrylonitrile, methacrylonitrile, vinyl-$C_{1-4}$-carboxylic acids and esters of acrylic or methacrylic acid with primary or secondary $C_{1-10}$ alcohols

and

B2) 0.5 to 35% by weight of at least one ester of acrylic or methacrylic acid with tertiary $C_4$-$C_{10}$ alcohols in quantities of up to 35% by weight B2) in the copolymer B),

by homogenization of components A) and B) in the melt in standard mixing and kneading units at temperatures above the melting point of the higher-melting component until components A1) and B) are at least partly chemically linked.

**2.** Thermoplastic moulding compounds of

A) 50 to 70% by weight of polyamide,

C) at least 15% by weight of vinyl copolymers C 1) and/or vinyl graft polymers C 2) and

D) 1 to 15% by weight of homogenization product of polyamide A1) and copolymer B) according to claim 1.

**3.** Thermoplastic moulding compounds as claimed in claims 1 and 2, characterized in that the vinyl copolymers and/or graft polymers C) are

C1) resin-like polymers having intrinsic viscosities of 0.3 to 1.5 dl/g (in toluene at 23 °C) of styrenes, α-methylstyrenes and acrylonitrile, methacrylonitrile, (meth)acrylates and vinyl-$C_{1-4}$-carboxylic acids or mixtures of these monomers

and/or

C2) graft polymers of monomers or mixtures thereof, particularly styrenes, α-methylstyrenes, acrylonitrile, methacrylonitrile, alkyl (meth)acrylates, on rubbers having glass temperatures below °C, preferably particulate, highly crosslinked diene or alkylacrylate rubbers having gel contents of less than 80% by weight and mean particle diameters ($d_{50}$) of 80 to 800 nm, or rubbers having a core/shell structure.

**4.** The use of the homogenization products D) claimed in claim 1 as compatibility promoters in the thermoplastic moulding compounds of polyamides A) and vinyl copolymers and/or vinyl graft polymers C) claimed in claim 1 or 3.

**Claims for the following Contracting State : CH**

**1.** Homogenization products of

A1) 40 to 80% by weight of partially crystalline and/or amorphous polyamides and

B) 20 to 60% by weight of thermoplastic copolymers or mixtures of several thermoplastic copolymers of

B1) at least one monomer from the group consisting of

B1.1) at least 15% by weight of styrenes and α-methylstyrenes which may also be alkyl-, haloalkyl- and/or a halogen-substituted

and

B1.2) 0 to 50% by weight of other monomers from the group consisting of acrylonitrile, methacrylonitrile, vinyl-$C_{1-4}$-carboxylic acids and esters of acrylic or methacrylic acid with primary or secondary $C_{1-10}$ alcohols

and

B2) 0.5 to 35% by weight of at least one ester of acrylic or methacrylic acid with tertiary $C_4$-$C_{10}$ alcohols in quantities of up to 35% by weight B2) in the copolymer B),

prepared by homogenization of components A) and B) in the melt in standard mixing and kneading units at temperatures above the melting point of the higher-melting component until components A1) and B) are at least partly chemically linked.

**2.** Homogenization products as claimed in claim 1, characterized in that thermoplastic copolymers B) of

B1.1) at least 30% by weight of styrene and/or α-methylstyrene and

B1.2) from 0 to 50% by weight of acrylonitrile, methyl methacrylate, n-butyl methacrylate, cyclohexyl methacrylate and/or vinylacetate and

B2) from 1 to 20% by weight of tertiary (meth)acrylates corresponding to the following formula

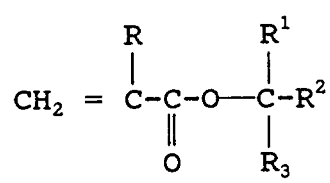

in which

R = H, $CH_3$ and

$R^1$, $R^2$, $R^3$ = alkyl so that the sum of the carbon atoms in $R^1$, $R^2$ and $R^3$ is from 3 to 9, are used.

**3.** Homogenization products as claimed in claim 1 or 2, characterized in that thermoplastic copolymers B) of

B1.1) α-methylstyrene and/or styrene and

B1.2) acrylonitrile and/or methylacrylate and

B2) tert.-butyl(meth)acrylate are used.

**4.** Homogenization products as claimed in any of claims 1 to 3, characterized in that thermoplastic copolymers B) of terpolymers containing at least

B1.1) 10% by weight of styrenes and

B1.2) 10 to 50% by weight of acrylonitrile,

B2) and 1 to 20% by weight of tert.-butyl (meth)acrylate, the percentages by weight totalling 100, based on the sum total of the % by weight components of component B),

are used.

**5.** Homogenization products as claimed in any of claims 1 to 4, characterized in that copolymers B) having intrinsic viscosities of from 0.2 to 2 (as measured in dl/g at room temperature in DMF) are used.

**6.** Thermoplastic moulding compounds of

A) 30 to 70% by weight of polyamide,

C) [100 mins (A + D)] % by weight of vinyl copolymers C 1) and/or vinyl graft polymers C 2), but always at least 10% by weight of C),

D) 0.5 to 25% by weight of a homogenization product prepared from

A1) 40 to 80% by weight of partially crystalline and/or amorphous polyamides and

B) 20 to 60% by weight of thermoplastic copolymers or mixtures of several thermoplastic copolymers of

B1) at least one monomer from the group consisting of

B1.1) at least 15% by weight of styrenes and α-methylstyrenes which may also be alkyl-, haloalkyl- and/or a halogen-substituted

and

B1.2) 0 to 50% by weight of other monomers from the group consisting of acrylonitrile, methacrylonitrile, vinyl-$C_{1-4}$-carboxylic acids and esters of acrylic or methacrylic acid with primary or secondary $C_{1-10}$ alcohols

and

B2) 0.5 to 35% by weight of at least one ester of acrylic or methacrylic acid with tertiary $C_4$-$C_{10}$ alcohols in quantities of up to 35% by weight B2) in the copolymer B),

by homogenization of components A) and B) in the melt in standard mixing and kneading units at temperatures above the melting point of the higher-melting component until components A1) and B) are at least partly chemically linked.

**7.** Thermoplastic moulding compounds of

A) 50 to 70% by weight of polyamide,

C) at least 15% by weight of vinyl copolymers C 1) and/or vinyl graft polymers C 2) and

D) 1 to 15% by weight of homogenization product of polyamide A1) and copolymer B) according to claim 1.

**8.** Thermoplastic moulding compounds as claimed in claims 6 and 7, characterized in that the vinyl copolymers and/or graft polymers C) are

C1) resin-like polymers having intrinsic viscosities of 0.3 to 1.5 dl/g (in toluene at 23 °C) of styrenes, α-methylstyrenes and acrylonitrile, methacrylonitrile, (meth)acrylates and vinyl-$C_{1-4}$-carboxylic acids or mixtures of these monomers

and/or

C2) graft polymers of monomers or mixtures thereof, particularly styrenes, α-methylstyrenes, acrylonitrile, methacrylonitrile, alkyl (meth)acrylates, on rubbers having glass temperatures below °C, preferably particulate, highly crosslinked diene or alkylacrylate rubbers having gel contents of less than 80% by weight and mean particle diameters ($d_{50}$) of 80 to 800 nm, or rubbers having a

core/shell structure.

**9.** The use of the homogenization products D) claimed in claim 6 as compatibility promoters in the thermoplastic moulding compounds of polyamides A) and vinyl copolymers and/or vinyl graft polymers C) claimed in claim 6 or 8.

**Revendications**
**Revendications pour les Etats contractants suivants : BE, DE, GB, FR, NL, IT, ES, LI**

**1.** Matières moulables thermoplastiques constituées par
A) de 30 à 70% en poids de polyamide,
C) [100 moins (A + D)] % en poids de copolymères vinyliques C 1) et/ou de polymères vinyliques greffés C 2), mais toujours au moins 10% en poids de C),
D) de 0,5 à 25% en poids d'un produit d'homogénéisation préparé à partir de
A1) de 40 à 80% en poids de polyamides partiellement cristallins et/ou amorphes, et
B) de 20 à 60% en poids de copolymères thermoplastiques ou de mélanges de plusieurs copolymères thermoplastiques constitués par
B1) au moins un monomère de la série de
B1.1) au moins 15% en poids des styrènes et des α-méthylstyrènes qui peuvent également être substitués par un groupe alkyle, par un groupe halogénalkyle et/ou par un halogène,
et
B1.2) de 0 à 50% en poids d'autres monomères de la série de l'acrylonitrile, du méthacrylonitrile, des acides carboxyliques en $C_1$-$C_4$ vinyliques et des esters d'acide acrylique ou méthacrylique avec des alcools primaires ou secondaires en $C_1$-$C_{10}$,
et
B2) de 0,5 à 35% en poids d'au moins un ester d'acide acrylique ou méthacrylique avec des alcools tertiaires en $C_4$-$C_{10}$ dans des quantités allant jusqu'à 35% en poids de B2) dans le copolymère B),
par homogénéisation des composants A) et B) en fusion dans des organes habituels de mélange et de malaxage, à des températures supérieures au point de fusion du composant à point de fusion le plus élevé, jusqu'à ce que l'on obtienne une liaison chimique au moins partielle entre les composants A1) et B).

**2.** Matières moulables thermoplastiques constituées par
A) de 50 à 70% en poids de polyamide,
C) au moins 15% en poids de copolymères vinyliques C 1) et/ou de polymères vinyliques greffés C 2), et
D) de 1 à 15% en poids d'un produit d'homogénéisation constitué par le polyamide A1) et le copolymère B) selon la revendication 1.

**3.** Matières moulables thermoplastiques selon les revendications 1 et 2, caractérisées en ce que les copolymères vinyliques et/ou les polymères vinyliques greffés C) sont
C1) des polymères résiniques possédant des viscosités limites de 0,3 à 1,5 dl/g (dans du toluène à 23 °C), constitués par des styrènes, des α-méthylstyrènes et de l'acrylonitrile, du méthacrylonitrile, des esters d'acides (méth)acryliques et des acides carboxyliques en $C_1$-$C_4$ vinyliques, respectivement des mélanges de ces monomères,
et/ou
C2) des polymères greffés de monomères ou encore de leurs mélanges, en particulier de styrènes, d'α-méthylstyrènes, d'acrylonitrile, de méthacrylonitrile, d'esters alkyliques d'acide (méth)acrylique, sur des caoutchoucs ayant des températures de transition vitreuse $< 0\,°C$, de préférence des caoutchoucs diéniques ou d'acrylate d'alkyle fortement réticulés de forme particulaire avec des teneurs en gel < 80% en poids et des diamètres moyens de particules ($d_{50}$) de 80 à 800 nm,
ou des caoutchoucs à structure noyau/enveloppe.

**4.** Utilisation des produits d'homogénéisation D) selon la revendication 1, comme agent d'amélioration de la compatibilité dans des matières moulables thermoplastiques constituées par des polyamides A) et des copolymères vinyliques et/ou des polymères vinyliques greffés C) selon la revendication 1 ou 3.

**Revendications pour l'Etat contractant suivant : CH**

**1.** Produits d'homogénéisation constitués par

A1) de 40 à 80% en poids de polyamides partiellement cristallins et/ou amorphes, et

B) de 20 à 60% en poids de copolymères thermoplastiques ou de mélanges de plusieurs copolymères thermoplastiques constitués par

B1) au moins un monomère de la série de

B1.1) au moins 15% en poids des styrènes et des $\alpha$-méthylstyrènes qui peuvent également être substitués par un groupe alkyle, par un groupe halogénalkyle et/ou par un halogène,

et

B1.2) de 0 à 50% en poids d'autres monomères de la série de l'acrylonitrile, du méthacrylonitrile, des acides carboxyliques en $C_1$-$C_4$ vinyliques et des esters d'acide acrylique ou méthacrylique avec des alcools primaires ou secondaires en $C_1$-$C_{10}$,

et

B2) de 0,5 à 35% en poids d'au moins un ester d'acide acrylique ou méthacrylique avec des alcools tertiaires en $C_4$-$C_{10}$ dans des quantités allant jusqu'à 35% en poids de B2) dans le copolymère B),

par homogénéisation des composants A) et B) en fusion dans des organes habituels de mélange et de malaxage, à des températures supérieures au point de fusion du composant à point de fusion le plus élevé, jusqu'à ce que l'on obtienne une liaison chimique au moins partielle entre les composants A1) et B).

**2.** Produits d'homogénéisation selon la revendication 1, caractérisés en ce qu'on met en oeuvre des copolymères thermoplastiques B) constitués par

B1.1) au moins 30% en poids de styrène et/ou d'$\alpha$-méthylstyrène, et

B1.2) de 0 à 50% en poids d'acrylonitrile, de méthacrylate de méthyle, de méthacrylate de n-butyle, de méthacrylate de cyclohexyle et/ou d'acétate de vinyle, et

B2) de 1 à 20% en poids d'ester tertiaire d'acide (méth)acrylique répondant à la formule

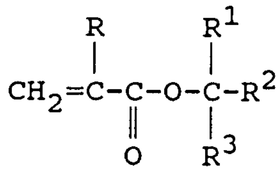

dans laquelle R = H, $CH_3$ et

$R^1$, $R^2$, $R^3$ = un groupe alkyle, de telle sorte que la somme des atomes de carbone dans $R^1$, $R^2$ et $R^3$ s'élève de 3 à 9.

**3.** Produits d'homogénéisation selon l'une quelconque des revendications 1 et 2, caractérisés en ce qu'on met en oeuvre des copolymères thermoplastiques B) constitués par

B1.1) de l'$\alpha$-méthylstyrène et/ou du styrène, et

B1.2) de l'acrylonitrile et/ou du méthacrylate de méthyle, et

B2) du (méth)acrylate de tert.-butyle.

**4.** Produits d'homogénéisation selon l'une quelconque des revendications 1 à 3, caractérisés en ce qu'on met en oeuvre des copolymères thermoplastiques B) à partir de terpolymères qui sont constitués au moins par

B1.1) 10% en poids de styrènes et

B1.2) de 10 à 50% en poids d'acrylonitrile,

B2) ainsi que de 1 à 20% en poids de (méth)acrylate de tert.-butyle, les % en poids se complétant pour donner 100, rapportés à la somme des composants en % en poids du composant B).

**5.** Produits d'homogénéisation selon l'une quelconque des revendications 1 à 4, caractérisés en ce que l'on met en oeuvre des copolymères B) ayant des viscosités limites de 0,2 à 2 (mesurées en dl/g à la

température ambiante dans du DMF).

**6.** Matières moulables thermoplastiques constituées par

A) de 30 à 70% en poids de polyamide,

C) [100 moins (A + D)] % en poids de copolymères vinyliques C 1) et/ou de polymères vinyliques greffés C 2), mais toujours au moins 10% en poids de C),

D) de 0,5 à 25% en poids d'un produit d'homogénéisation préparé à partir de

A1) de 40 à 80% en poids de polyamides partiellement cristallins et/ou amorphes, et

B) de 20 à 60% en poids de copolymères thermoplastiques ou de mélanges de plusieurs copolymères thermoplastiques constitués par

B1) au moins un monomère de la série de

B1.1) au moins 15% en poids des styrènes et des α-méthylstyrènes qui peuvent également être substitués par un groupe alkyle, par un groupe halogénalkyle et/ou par un halogène,

et

B1.2) de 0 à 50% en poids d'autres monomères de la série de l'acrylonitrile, du méthacrylonitrile, des acides carboxyliques en $C_1$-$C_4$ vinyliques et des esters d'acide acrylique ou méthacrylique avec des alcools primaires ou secondaires en $C_1$-$C_{10}$,

et

B2) de 0,5 à 35% en poids d'au moins un ester d'acide acrylique ou méthacrylique avec des alcools tertiaires en $C_4$-$C_{10}$ dans des quantités allant jusqu'à 35% en poids de B2) dans le copolymère B),

par homogénéisation des composants A) et B) en fusion dans des organes habituels de mélange et de malaxage, à des températures supérieures au point de fusion du composant à point de fusion le plus élevé, jusqu'à ce que l'on obtienne une liaison chimique au moins partielle entre les composants A1) et B).

**7.** Matières moulables thermoplastiques constituées par

A) de 50 à 70% en poids de polyamide,

C) au moins 15% en poids de copolymères vinyliques C 1) et/ou de polymères vinyliques greffés C 2), et

D) de 1 à 15% en poids d'un produit d'homogénéisation constitué par le polyamide A1) et le copolymère B) selon la revendication 1.

**8.** Matières moulables thermoplastiques selon les revendications 6 et 7, caractérisées en ce que les copolymères vinyliques et/ou les polymères vinyliques greffés C) sont

C1) des polymères résiniques possédant des viscosités limites de 0,3 à 1,5 dl/g (dans du toluène à 23 °C), constitués par des styrènes, des α-méthylstyrènes et de l'acrylonitrile, du méthacrylonitrile, des esters d'acides (méth)acryliques et des acides carboxyliques en $C_1$-$C_4$ vinyliques, respectivement des mélanges de ces monomères,

et/ou

C2) des polymères greffés de monomères ou encore de leurs mélanges, en particulier de styrènes, d'α-méthylstyrènes, d'acrylonitrile, de méthacrylonitrile, d'esters alkyliques d'acide (méth)acrylique, sur des caoutchoucs ayant des températures de transition vitreuse $< 0$ °C, de préférence des caoutchoucs diéniques ou d'acrylate d'alkyle fortement réticulés de forme particulaire avec des teneurs en gel $< 80$% en poids et des diamètres moyens de particules ($d_{50}$) de 80 à 800 nm, ou des caoutchoucs à structure noyau/enveloppe.

**9.** Utilisation des produits d'homogénéisation D) selon la revendication 6, comme agent d'amélioration de la compatibilité dans des matières moulables thermoplastiques constituées par des polyamides A) et des copolymères vinyliques et/ou des polymères vinyliques greffés C) selon la revendication 6 ou 8.